# EUROPEAN PATENT APPLICATION

(11) **EP 4 823 050 A1**
(43) Date of publication of application: **14.10.2026**
(21) Application number: 25169039.2
(22) Date of filing: 08.04.2025
(51) Int. Cl.: H04L 41/0213, H04L 41/0226, H04L 41/022

(54) **ELECTRONIC DEVICE AND DEVICE MANAGEMENT METHOD**

(71) Applicant: Moxa Inc., 242032 New Taipei City (TW)
(72) Inventor: TAN, YOONG TAK, 242032 New Taipei City (TW); CHU, Shih-Chieh, 242032 New Taipei City (TW)
(74) Representative: Becker Kurig & Partner Patentanwälte mbB

(57) **Abstract**

An electronic device (100) and a device management method are provided. The electronic device (100) includes a memory (112) and a processor (111). When the processor (111) receives a first command packet packed by to a first device management protocol from a remote host device (120), the first device management protocol module (113) unpacks the first command packet to obtain a command data according to the first device management protocol. When the processor (111) determines the command data is coded by a second device management protocol, the second device management protocol module (114) generates a second command packet by packing the command data according to the second device management protocol. The processor (111) sends the second command packet to a target device (130_1 to 130_M), and the processor (111) receives a first response packet from the target device (130_1 to 130_M).

## Description

### BACKGROUND

### Technical Field

The disclosure relates a device management technology, particularly, the disclosure relates to an electronic device with a device management function and a device management method.

### Description of Related Art

In a general device management architecture, the communication between a control center device, a computer host device and a computing resource apparatus may use a latest device management protocol, thus the computer host device and the computing resource apparatus need additional design or develop data settings, data formats and corresponding target device management functions relating the latest device management protocol. Therefore, the general device management architecture requires high setup costs and cannot maintain the latest communication functions.

### SUMMARY

The disclosure is directed to an electronic device and a device management method, which can provide good device management functions and have the advantage of low construction cost.

The electronic device of the disclosure includes a memory and a processor. The memory is configured to store a first device management protocol module and a second device management protocol module. The processor is coupled to the memory, and configured to execute the first device management protocol module and the second device management protocol module. When the processor receives a first command packet packed by to a first device management protocol from a remote host device. The first device management protocol module is configured to unpack the first command packet to obtain a command data according to the first device management protocol. The processor determines whether the command data is coded by a second device management protocol. When the processor determines the command data is coded by the second device management protocol, the second device management protocol module is configured to generate a second command packet by packing the command data according to the second device management protocol. The processor sends the second command packet to a target device, and the processor receives a first response packet from the target device.

The device management method of the disclosure includes the following steps: receiving a first command packet packed by to a first device management protocol from a remote host device; unpacking the first command packet to obtain a command data according to the first device management protocol; determining whether the command data is coded by a second device management protocol; when the command data is coded by the second device management protocol, generating a second command packet by packing the command data according to the second device management protocol; sending the second command packet to a target device; and receiving a first response packet from the target device.

Based on the above, according to the electronic device and device management method of the disclosure, the electronic device may support two device management protocol. The electronic device may receive the command packet through the first device management protocol from the remote host device, and may and access data of the target device according to the second device management protocol.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram of an electronic device according to an embodiment of the disclosure.
FIG. 2 is a flowchart of a device management method according to an embodiment of the disclosure.
FIG. 3 is a schematic diagram of a device management process according to an embodiment of the disclosure.

### DESCRIPTION OF THE EMBODIMENTS

Reference will now be made in detail to the exemplary embodiments of the disclosure, examples of which are illustrated in the accompanying drawings. Whenever possible, the same reference numbers are used in the drawings and the description to refer to the same or like components.

Certain terms are used throughout the specification and appended claims of the disclosure to refer to specific components. Those skilled in the art should understand that electronic device manufacturers may refer to the same components by different names. This article does not intend to distinguish those components with the same function but different names. In the following description and rights request, the words such as "comprise" and "include" are open-ended terms, and should be explained as "including but not limited to...".

The term "coupling (or electrically connection)" used throughout the whole specification of the present application (including the appended claims) may refer to any direct or indirect connection means. For example, if the text describes that a first device is coupled (or connected) to a second device, it should be interpreted that the first device may be directly connected to the second device, or the first device may be indirectly connected through other devices or certain connection means to be connected to the second device.

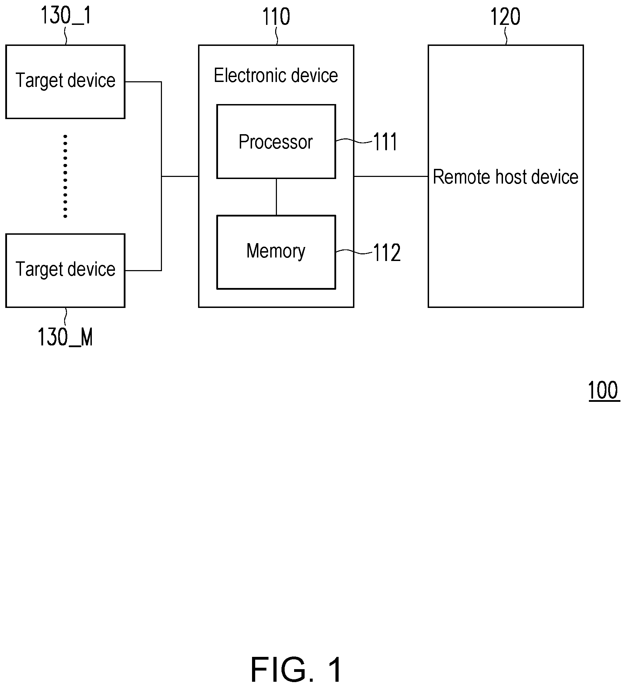

FIG. 1 is a schematic diagram of an electronic device according to an embodiment of the disclosure. Referring to FIG. 1, a device management system 100 includes an electronic device 110, a remote host device 120 and a plurality of target devices 130_1 to 130_M, where M is an integer greater than 1. The electronic device 110 may be a computer host for monitoring the plurality of target devices 130_1 to 130_M, and the plurality of target devices 130_1 to 130_M may be, for example, configured to provide computing resources. The remote host device 120 is coupled to the electronic device 110, and the electronic device 110 is further coupled to the plurality of target devices 130_1 to 130_M. In the embodiment of the disclosure, the remote host device 120 may be a control center device. The remote host device 120 may have data processing function and a network connection interface. The remote host device 120 may communicate with the electronic device 110 through wired or wireless communication. In the embodiment of the disclosure, the remote host device 120 may be a computer device, but the disclosure is not limited thereto. The electronic device 110 includes a processor 111 and a memory 112. The electronic device 110 may further include network connection interfaces for communicate with the remote host device 120 and the plurality of target devices 130_1 to 130_M. The electronic device 110 may also communicate with the plurality of target devices 130_1 to 130_M through wired or wireless communication.

In the embodiment of disclosure, the electronic device 110 and the plurality of target devices 130_1 to 130_M may form a data processing center. Each of the plurality of target devices 130_1 to 130_M may be composed of, for example, a data processing server, a plurality of storage devices, a plurality of processing chips, a plurality of hardware accelerators, or a plurality peripheral devices. The plurality peripheral devices may include a plurality of sensors, a plurality of fan units, or a plurality of switch units, but the disclosure is not limited thereto. In the embodiment of disclosure, a device manager may operate the remote host device 120 to connect the electronic device 110, and access data of at least one of the plurality of target devices 130_1 to 130_M through the electronic device 110 to perform device management on the plurality of target devices 130_1 to 130_M.

In the embodiment of the disclosure, electronic device 110 may include a baseboard management controller (BMC), and the processor 111 may be implemented as the baseboard management controller. The processor 111 may be, for example, a central processing unit (CPU), or other programmable general-purpose or special-purpose microprocessor, digital signal processor (DSP), programmable controller, application specific integrated circuits (ASIC), programmable logic device (PLD) or other similar devices or a combination of these devices. The memory 112 may include, for example, a static random-access memory (SRAM), a dynamic random-access memory (DRAM), a synchronized dynamic random-access memory (SDRAM), or a flash memory. In one embodiment of the disclosure, the plurality of target devices 130_1 to 130_M may also include the baseboard management controller, respectively.

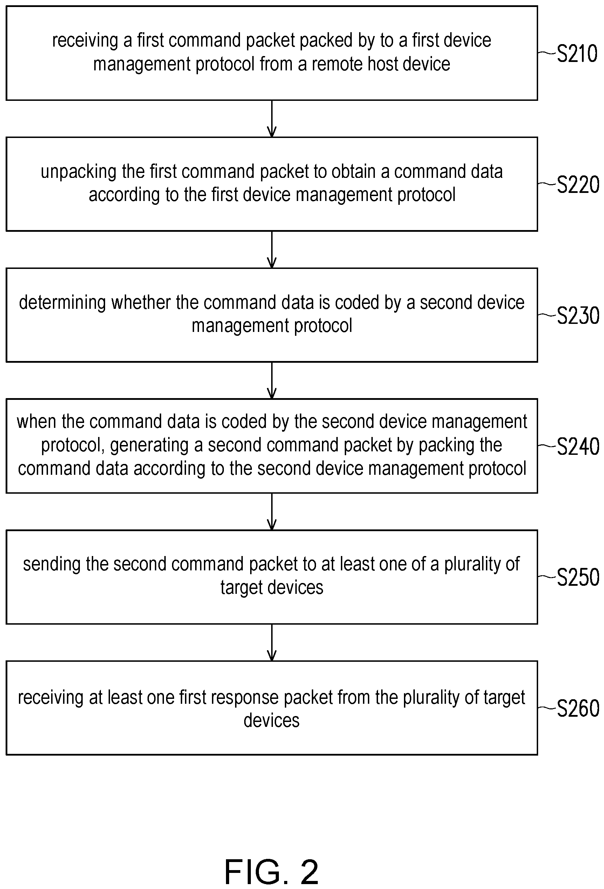

FIG. 2 is a flowchart of a device management method according to an embodiment of the disclosure. Referring to FIG. 1 and FIG. 2, the electronic device 110 may perform the following steps S210 to S260. In the embodiment of disclosure, the electronic device 110 and the remote host device 120 may support a first device management protocol and a second device management protocol, respectively. The remote host device 120 may pack a command data corresponding to the second device management protocol by the first device management protocol to generate a first command packet. In the embodiment of the disclosure, the command data may be a data read command, a data write command, or other control commands, and the disclosure is not limited thereto. The remote host device 120 may send the first command packet to the electronic device 110.

In step S210, the electronic device 110 may receive a first command packet packed by to a first device management protocol from the remote host device 120. In step S220, the processor 111 may unpack the first command packet to obtain the command data according to the first device management protocol. In step S230, the processor 111 may determine whether the command data is coded by the second device management protocol. In step S240, when the command data is coded by the second device management protocol, the processor 111 may generate a second command packet by packing the command data according to the second device management protocol. In step S250, the processor 111 may send the second command packet to at least one of the plurality of target devices 130_1 to 130_M. In the embodiment of the disclosure, the command data may include an object identifier, and the processor 111 may send the second command packet to at least one specific target device according to the object identifier. In step S260, the processor 111 may receive at least one first response packet from the at least one of the plurality of target devices 130_1 to 130_M.

In the embodiment of the disclosure, the processor 111 may generate at least one second response packet according to the at least one first response packet, and the at least one second response packet is packed according to the second device management protocol. Moreover, the processor 111 may send the least one second response packet to the remote host device 120. In one embodiment of the disclosure, the processor 111 may collect a plurality of first response packets from the target devices 130_1 to 130_M during a preset period, and the processor 111 may store the plurality of first response packets firstly. Then, the remote host device 120 may readout the plurality of first response packets from the electronic device 110 at one time according to a preset time length or a preset operation policy.

In the embodiment of the disclosure, the first device management protocol may be an intelligent platform management interface (IPMI) protocol, and the second device management protocol may be a simple network management protocol (SNMP), a Modbus protocol or any fieldbus protocol. In the embodiment of the disclosure, the remote host device 120 only need to pack the command data corresponding to the simple network management protocol or the Modbus protocol following the intelligent platform management interface protocol, and the electronic device 120 only need to unpack the command packet following the intelligent platform management interface protocol to obtain the command data corresponding to the simple network management protocol or the Modbus protocol. Then, the electronic device 120 may access the specific target device according to the command data based on the simple network management protocol or the Modbus protocol. In one embodiment of the disclosure, if the second device management protocol is the simple network management protocol, when any one of the plurality of target devices 130_1 to 130_M fails, the failed target devices 130_1 to 130_M may actively report a failure message to the electronic device 120 through the simple network management protocol.

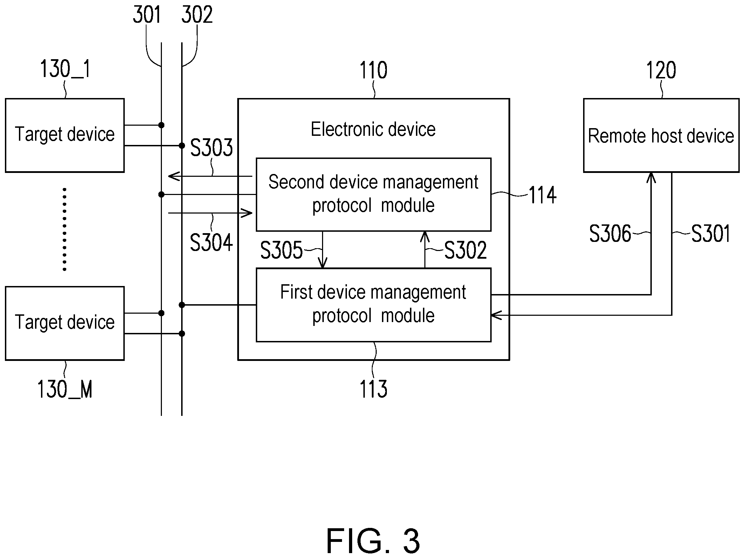

FIG. 3 is a schematic diagram of a device management process according to an embodiment of the disclosure. Referring to FIG. 1 and FIG. 3, the device management system 100 may implement an operation scenario shown in FIG. 3. In the embodiment of the disclosure, the remote host device 120 may communicate with the electronic device 110 through a network connection, and the electronic device 110 may communicate with the plurality of target devices 130_1 to 130_M through a local area network 301. In the embodiment of the disclosure, the memory 112 of the electronic device 110 may store a first device management protocol module 113 and a second device management protocol module 114.

In the embodiment of the disclosure, the first device management protocol module 113 may implement as an intelligent platform management interface protocol engine to perform related data processing. The second device management protocol module 114 may implement as a simple network management protocol engine or a Modbus protocol engine to perform related data processing. In the embodiment of the disclosure, each of the plurality of target devices 130_1 to 130_M may include a simple network management protocol server or a Modbus protocol server to perform related data processing and related device management functions following the simple network management protocol or the Modbus protocol.
In the embodiment of the disclosure, in step S301, the remote host device 120 may send a first command packet packed by the intelligent platform management interface protocol, and the first command packet includes a command data corresponding to the simple network management protocol or the Modbus protocol. The first device management protocol module 113 may unpack the first command packet to obtain the command data following the intelligent platform management interface protocol. In the embodiment of the disclosure, The first device management protocol module 113 may determine the command data is coded by the simple network management protocol or the Modbus protocol. Thus, in step S302, the first device management protocol module 113 may provide the command data to the second device management protocol module 114. The second device management protocol module 114 may pack the command data to generate a second command packet following the simple network management protocol or the Modbus protocol. In step S303, the second device management protocol module 114 may send the second command packet to at least one of the plurality of target devices 130_1 to 130_M through the local area network 301, the internet or other internet devices.

In the embodiment of the disclosure, the at least one specific target device receiving the second command packet may unpack the second command packet according to the simple network management protocol or the Modbus protocol to obtain the command data. The at least one specific target device receiving the second command packet may generate at least one response data according to the command data, and the at least one specific target device receiving the second command packet may generate the first response packet by packing the response data according to the simple network management protocol or the Modbus protocol. In step S304, the at least one specific target device receiving the second command packet may send the first response packet to the second device management protocol module 114 through the local area network 301.

In the embodiment of the disclosure, the second device management protocol module 114 may unpack the first response packet to obtain the response data according to the simple network management protocol or the Modbus protocol. In step S305, the second device management protocol module 114 may provide the response data to the first device management protocol module 113. The first device management protocol module 113 may pack the response data to generate a second response packet according to the intelligent platform management interface protocol. In step S306, the first device management protocol module 113 may send the second response packet to the remote host device 120. Thus, the remote host device 120 may unpack the second response packet to obtain the response data according to the intelligent platform management interface protocol.

Therefore, the remote host device 120 may communicate with the electronic device 110 through the latest communication protocol, and the cost of setting up a dedicated independent communication bus between the electronic device 110 and the plurality of target devices 130_1 to 130_M may be saved effectively.

However, in one embodiment of the disclosure, the device management system 100 may further include a dedicated independent communication bus 302 set up between the electronic device 110 and the plurality of target devices 130_1 to 130_M. The dedicated independent communication bus 302 may be an intelligent platform management bus (IPMB). In one embodiment of the disclosure, when the first device management protocol module 113 determines that the command data is coded by the intelligent platform management interface protocol, the first device management protocol module 113 may pack the command data to generate a third command packet according to the intelligent platform management interface protocol. The first device management protocol module 113 may transmit the third command packet to at least one of the plurality of target devices 130_1 to 130_M through the dedicated independent communication bus 302.

Then, the at least one specific target device receiving the third command packet may unpack the third command packet following the intelligent platform management interface protocol to obtain the command data. The at least one specific target device receiving the third command packet may generate at least one response data according to the command data, and the at least one specific target device receiving the third command packet may generate a third response packet by packing the response data following the intelligent platform management interface protocol. The at least one specific target device receiving the third command packet may send the third response packet to the first device management protocol module 113 through the dedicated independent communication bus 302. The first device management protocol module 113 may unpack the third response packet to obtain the response data following the intelligent platform management interface protocol, or may directly send the third response packet to the remote host device 120.

In summary, the electronic device and the device management method of the disclosure may achieve good remote management capability, higher security or a wider range of functions between the electronic device and the remote host device. Moreover, the device management system does not need to additional design or develop data settings, data formats and corresponding target device management functions relating, for example, the intelligent platform management interface protocol.

## Claims

1. An electronic device (100), comprising:
a memory (112), configured to store a first device management protocol module (113) and a second device management protocol module (114); and
a processor (111), coupled to the memory (112), and configured to execute the first device management protocol module (113) and the second device management protocol module (114),
wherein when the processor (111) receives a first command packet packed by to a first device management protocol from a remote host device (120), the first device management protocol module (113) is configured to unpack the first command packet to obtain a command data according to the first device management protocol,
wherein the processor (111) determines whether the command data is coded by a second device management protocol, and when the processor (111) determines the command data is coded by the second device management protocol, the second device management protocol module (114) is configured to generate a second command packet by packing the command data according to the second device management protocol,
wherein the processor (111) sends the second command packet to a target device (130_1 to 130_M), and the processor (111) receives a first response packet from the target device (130_1 to 130_M).

2. The electronic device (100) according to claim 1, wherein the target device (130_1 to 130_M) receives the second command packet, and the target device (130_1 to 130_M) unpack the second command packet according to the second device management protocol to obtain the command data,
wherein the target device (130_1 to 130_M) generates a response data according to the command data, and the target device (130_1 to 130_M) generates the first response packet by packing the response data according to the second device management protocol.

3. The electronic device (100) according to claim 1, wherein when the processor (111) receives the first response packet packed by the second device management protocol from the target device (130_1 to 130_M), the second device management protocol module (114) is configured to unpack the first response packet to obtain the response data according to the second device management protocol,
wherein the first device management protocol module (113) is configured to pack the response data to generate a second response packet according to the first device management protocol, and the processor (111) sends the second response packet to the remote host device (120).

4. The electronic device (100) according to claim 1, wherein the command data includes an object identifier.

5. The electronic device (100) according to claim 1, wherein the processor (111) transmits the second command packet to the target device (130_1 to 130_M) through a local area network.

6. The electronic device (100) according to claim 1, wherein the target device (130_1 to 130_M) comprises a baseboard management controller.

7. The electronic device (100) according to claim 1, wherein the processor (111) is a baseboard management controller.

8. The electronic device (100) according to claim 1, wherein when the processor (111) determines the command data is coded by the first device management protocol, the first device management protocol module (113) is configured to generate a third command packet by packing the command data according to the first device management protocol,
wherein the processor (111) sends the third command packet to a target device (130_1 to 130_M).

9. The electronic device (100) according to claim 8, wherein the processor (111) transmits the third command packet to the target device (130_1 to 130_M) through an independent communication bus.

10. The electronic device (100) according to claim 1, wherein the first device management protocol is an intelligent platform management interface protocol.

11. The electronic device (100) according to claim 1, wherein the second device management protocol is a simple network management protocol.

12. The electronic device (100) according to claim 1, wherein the second device management protocol is a Modbus protocol.

13. A device management method, comprising:
receiving a first command packet packed by to a first device management protocol from a remote host device (120);
unpacking the first command packet to obtain a command data according to the first device management protocol;
determining whether the command data is coded by a second device management protocol;
when the command data is coded by the second device management protocol, generating a second command packet by packing the command data according to the second device management protocol;
sending the second command packet to a target device (130_1 to 130_M); and
receiving a first response packet from the target device (130_1 to 130_M).

14. The device management method according to claim 13, further comprising:
receiving the second command packet by the target device (130_1 to 130_M);
unpacking the second command packet according to the second device management protocol to obtain the command data by the target device (130_1 to 130_M);
generating a response data according to the command data by the target device (130_1 to 130_M); and
generating the first response packet by packing the response data according to the second device management protocol by the target device (130_1 to 130_M).

15. The device management method according to claim 13, further comprising:
unpacking the first response packet to obtain the response data according to the second device management protocol;
packing the response data to generate a second response packet according to the first device management protocol; and
sending the second response packet to the remote host device (120).
